# EUROPÄISCHE PATENTSCHRIFT

(11) **EP 0 722 396 B1**
(45) Veröffentlichungstag und Bekanntmachung des Hinweises auf die Patenterteilung: **18.06.1997**
(21) Anmeldenummer: 94928874.0
(22) Anmeldetag: 07.10.1994
(51) Int. Cl.: B60R 25/10

(54) **VERFAHREN ZUM EIGENTUMSSCHUTZ VON WASSERFAHRZEUGEN**
ANTI-THEFT PROCESS FOR WATERCRAFT
PROCEDE DE PROTECTION ANTIVOL DE BATEAUX

(30) Priorität: 11.10.1993 DE 4334601
(43) Veröffentlichungstag der Anmeldung: 24.07.1996
(73) Patentinhaber: Rinsch, Hartmut, D-20251 Hamburg (DE)
(72) Erfinder: PANNEN, Torsten, D-21224 Rosengarten (DE)
(74) Vertreter: Rupprecht, Kay, Dipl.-Ing.
(86) Internationale Anmeldenummer: EP9403318
(87) Internationale Veröffentlichungsnummer: WO9510433

(56) Entgegenhaltungen:
- FR-A- 2 587 664
- FR-A- 2 593 306

## Beschreibung

Die Erfindung betrifft ein Verfahren zum Eigentumsschutz von Wasserfahrzeugen gemäß dem Oberbegriff des Anspruchs 1.

Unter dem Begriff "Wasserfahrzeug" sind vorliegend insbesondere, aber nicht ausschließlich Segelboote, Motorsegler oder Motorjachten zu verstehen, wobei der "räumlich abgrenzbare Bereich" beispielsweise ein Hafen mit einer Ein- und Ausfahrt ist, beispielsweise eine Marina. Die stationäre, zur Marina gehörende Sende-/Empfangseinheit (im folgenden nur noch "S/E-Einheit") kann beispielsweise auf einem der Molenköpfe positioniert werden, welche die Einfahrt und die Ausfahrt des Hafens begrenzen, und der von der stationären S/E-Einheit ausgehende elektromagnetische Sektor kann auf dem gegenüberliegenden Molenkopf gerichtet sein, wodurch die Hafeneinfahrt nur durch diesen elektromagnetischen Sektor passiert werden kann. Unter dem Begriff "Eigentumsschutz" wird vorliegend ein Schutz vor unlegitimierter Fremdnutzung der genannten Wasserfahrzeuge verstanden.

Die Fremdnutzung von Segelbooten, Motorseglern und Motorjachten ohne Legitimation durch den Schiffseigner, sowie der Totalverlust des Wasserfahrzeugs durch organisierten Diebstahl, stellen ein großes und zunehmendes Problem für die Schiffseigner dar. Lange Abwesenheit der Schiffseigner, die Unübersichtlichkeit insbesondere großer Marinen, und die zwangsläufige Anonymität begünstigen die unberechtigte Fremdnutzung der Segel- und Motorjachten, die immer häufiger "ausgeliehen" oder gestohlen werden, ohne daß der Eigner unmittelbar Kenntnis erlangt. Die Fremdnutzung wird erst dann entdeckt, wenn der Eigner vor Ort den Verlust seiner Jacht feststellt. Unberechtigt ausgeliehene Jachten werden sehr häufig nach der Nutzung an einem anderen Ort festgemacht, wo dann wiederum die Anonymität dafür sorgt, daß die Entdeckung der unberechtigten Fremdnutzung sehr lange Zeit in Anspruch nimmt. Die Ermittlungen nach den Tätern sind wegen des Zeitfaktors meist wenig erfolgreich, da zwischen dem Zeitpunkt der Entwendung der Jacht und der Feststellung der Entwendung häufig mehrere Wochen liegen. Organisierte Diebe haben daher genug Zeit, das Schiff umzuspritzen, umzurüsten und somit zu neutralisieren.

Um diesem Problem zu begegnen, werden die für Kraftfahrzeuge bekannten Alarmanlagen auch für Segel- und Motorjachten genutzt. Hierbei besteht jedoch das Problem, daß die Jachten häufig über Wochen nicht genutzt werden und der Schiffseigner meist nicht in der Nähe der Marina, sondern weit entfernt wohnt. Wird die Jacht aufgebrochen, heult die Alarmanlage los, und die Täter werden zunächst in die Flucht geschlagen. Da der Schiffseigner von diesem Alarm jedoch direkt meistens nichts mitbekommt und sich - falls überhaupt anwesend - andere Personen in der Regel nur wenig um derartige Alarme kümmern, ist diese bekannte Alarmanlage nicht sehr effektiv. Hinzu kommt, daß diese Alarmanlagen eine relativ hohe Fehlalarmrate aufweisen, so daß es zu einer Ruhestörung in der Marina kommen kann. Das zwingt den Schiffseigner nicht selten dazu, die Alarmanlage wieder abzuschalten.

Aus der FR-A-2 587 664 ist eine Vorrichtung zum Eigentumsschutz von Wasserfahrzeugen bekannt, die in einem räumlich abgrenzbaren Bereich liegen, mit einer stationären S/E-Einheit und mit einer fahrzeugseitigen S/E-Einheit, ferner mit einer stationären Lichtschranke und einem Dopplerradar, welche die stationäre S/E-Einheit zur Aussendung eines Abfragesignals triggern. Das Identifikationssignal des Wasserfahrzeugs erhält jedoch keine Zusatzkennung, weshalb kein "Brandmarken" eines gestohlenen Fahrzeugs möglich ist, und damit auch keine Identifikation von unrechtmäßigen Benutzungen beim Einlaufen in einen fremden Hafen oder auf hoher See.

Die FR-A-2 593 306 beschreibt eine Vorrichtung, die nach einem dem Oberbegriff des Anspruchs 1 entsprechenden Verfahren zum Eigentumsschutz von Wasserfahrzeugen arbeitet, das dem Verfahren der FR-A-2 587 664 sehr ähnlich ist. Allerdings geht dieses bekannte Verfahren noch einen Schritt weiter, da das vom Wasserfahrzeug abgestrahlte Antwortsignal sowohl aus einer Grundkennung als auch einer Zusatzkennung (Legitimationskennung) besteht. Allerdings erfolgt auch bei diesem bekannten Verfahren keine Rückübertragung eines "brandmarkenden" Codes, womit keine Identifikation von unrechtmäßig benutzten Fahrzeugen beim Einlaufen in einen fremden Hafen oder auf hoher See möglich ist.

Aufgabe der vorliegenden Erfindung ist es, ein Verfahren zum Eigentumsschutz von Wasserfahrzeugen, insbesondere von Segel- und Motorjachten anzugeben, das nur bei unberechtigtem Auslaufen aus der Marina aktiv wird und den Eigner oder eine beauftragte Organisation verzugslos und effektiv über die unlegitimierte Fremdnutzung informiert. Diese Aufgabe wird durch ein Verfahren zum Eigentumsschutz von Wasserfahrzeugen mit den Merkmalen des Anspruchs 1 gelöst.

Mit dem erfindungsgemäßen Verfahren werden sowohl ein- und auslaufende Wasserfahrzeuge, die mit der erfindungsgemäßen S/E-Einheit ausgerüstet sind, mittels einer stationären S/E-Einheit am Molenkopf der Marina überwacht, als auch derart ausgerüstete Wasserfahrzeuge auf hoher See durch Abfrage mittels einer mobilen S/E-Einheit durch den Küstenschutz. In beiden Fällen wird die fahrzeugseitige S/E-Einheit nur dann aktiv, wenn das Suchsignal der Abfragenden S/E-Einheit empfangen wird. Dann nämlich strahlt die fahrzeugeigene S/E-Einheit das Identifikationssignal mit einer das Fahrzeug identifizierenden Grundkennung und mit einer die rechtmäßige oder unrechtmäßige Benutzung des Fahrzeugs kennzeichnenden Zusatzkennung ab. Im Falle einer stationären S/E-Einheit wird in deren Zentralrechner daraufhin überprüft, ob für diese Grundkennung eine Legitimation zum Auslaufen vorliegt, oder aber ob die Grundkennung als gestohlen gemeldet ist. Ist letzteres der Fall, oder liegt keine Legitimation zum Auslaufen vor, wird ein Alarmierungs- und Informationsprogramm ausgelöst, das eine Überwachungsorganisation oder aber den Schiffseigner direkt (beispielsweise per Telefax) über die unberechtigte Fremdnutzung des Fahrzeugs informiert. Ferner sendet die stationäre S/E-Einheit bei Empfang einer dem Zentralrechner bekannten Kennung diese mit einer Zusatzkennung an die fahrzeugseitige S/E-Einheit zurück, wobei die zurückgesendete Zusatzkennung einem ersten vorbestimmten Wert, zum Beispiel "0", entspricht, wenn das Fahrzeug bzw. seine Kennung vorher durch Eingabe des entsprechenden Codes im Zentralrechner zum Auslaufen legitimiert wurde, während die zurückgesendete Zusatzkennung vom Zentralrechner auf einen zweiten Wert "X" gesetzt wird, wenn keine Legitimation vorliegt. Somit wird die Zusatzkennung nur von der stationären S/E-Einheit geändert bzw. gesetzt, und zwar zu "0", wenn das geschützte Fahrzeug berechtigt ausläuft, und zu "X", wenn es unberechtigt ausläuft. Damit bekommt das auslaufende geschützte Fahrzeug gleichsam einen für den Schiffsführer unsichtbaren "Stempel" aufgedrückt, der das Schiff als unrechtmäßig oder rechtmäßig benutzt identifizierbar macht. Diese beim Auslaufen von der stationären S/E-Einheit gesetzte Zusatzkennung wird beim Einlaufen in einen anderen, mit dem erfindungsgemäßen Verfahren geschützten Hafen von der dortigen stationären S/E-Einheit beim Passieren des elektromagnetischen Sektors gelesen, und es wird durch den dortigen Zentralrechner das Alarmierungs- und Informationsprogramm ausgelöst, wenn die Zusatzkennung "X" ist, das heißt von dem vorbestimmten Wert "0" abweicht.

Vorteilhafte Weiterbildungen der Erfindung sind in den Unteransprüchen angegeben.

Zum Schutz vor unerwünschter Manipulation des Verfahrens ist vorzugsweise vorgesehen, daß die Zusatzkennung nur in dem Zentralrechner der stationären S/E-Einheit geändert werden kann. Desweiteren ist vorgesehen, daß der Zentralrechner die empfangene Grundkennung mit den abgespeicherten Grundkennungen vergleicht und das Alarmierungs- und Informationsprogramm auslöst, wenn die empfangene oder die abgespeicherte Zusatzkennung nicht den vorbestimmten Wert enthält. Hierbei wird der Vergleich der empfangenen Grundkennung mit den im Zentralrechner abgespeicherten Grundkennungen zu der Feststellung benutzt, ob es sich um ein einlaufendes oder auslaufendes Fahrzeug handelt. Ist die empfangene Grundkennung dem Zentralrechner bekannt, so handelt es sich um ein auslaufendes Fahrzeug, da die Grundkennungen aller innerhalb des abgegrenzten Bereichs liegenden geschützten Fahrzeuge in dem Zentralrechner abgespeichert sind. Ist die empfangene Grundkennung dem Zentralrechner nicht bekannt, so erkennt er automatisch ein einlaufendes Fahrzeug. Für die Entscheidung des Zentralrechners, ob das Alarmierungs- oder Informationsprogramm ausgelöst werden soll, ist die empfangene Zusatzkennung relevant, wenn es sich um ein einlaufendes Fahrzeug handelt, wohingegen die im Zentalrechner abgespeicherte Zusatzkennung relevant ist, wenn die empfangene Kennung dem Zentralrechner bekannt ist, es sich somit um ein auslaufendes geschütztes Fahrzeug handelt.

Läuft ein durch das erfindungsgemäße Verfahren geschütztes Wasserfahrzeug in einen geschützten Hafen ein, ist vorzugsweise vorgesehen, daß der stationäre Zentralrechner bei Empfang eines Identifikationssignals mit einer unbekannten Kennung und mit einer auf den ersten vorbestimmten Wert "0" gesetzten Zusatzkennung die Kennung bis zum Auslaufen des Fahrzeugs abspeichert. Damit ist zu jeder Zeit sichergestellt, daß alle in dem geschützten Hafen befindlichen Wasserfahrzeuge, die durch das erfindungsgemäße Verfahren geschützt sind, mit ihren Grundkennungen in dem Zentralrechner gespeichert sind.

Eine weitere vorteilhafte Ausgestaltung des Eigentumschutzverfahrens sieht vor, daß der räumlich abgrenzbare Bereich durch wenigstens einen gerichteten elektromagnetischen Sektor abgegrenzt wird, der von wenigstens einer stationären S/E-Einheit erzeugt wird. Diese kann sich, wie vorstehend bereits erwähnt, auf einem Molenkopf der Hafenausfahrt befinden und in Richtung auf den gegenüberliegenden Molenkopf gerichtet sein. Somit wird ein elektromagnetischer "Vorhang" zwischen den Molenköpfen der Hafeneinfahrt erzeugt. Beim Passieren des stationären elektromagnetischen Sektors wird die fahrzeugseitige S/E-Einheit zur Abgabe des Identifikationssignals an die stationäre S/E-Einheit aufgefordert.

Im folgenden wird das erfindungsgemäße Verfahren mit einigen bevorzugten Ausgestaltungen an Hand einer Zeichnung näher erläutert, welche einen Jachthafen als räumlich abgrenzbaren, geschützten Bereich zeigt.

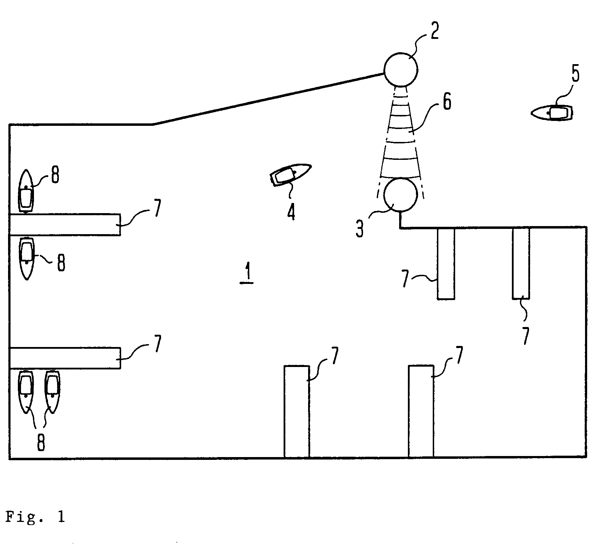

In der Fig. 1 ist ein Jachthafen 1 (auch Marina genannt) mit einer Reihe von Piers 7 und an den Piers festgemachten Segel- oder Motorjachten 8 dargestellt. Der Jachthafen besitzt eine Ein- und Ausfahrt, die durch zwei Molenköpfe 2, 3 begrenzt ist. Auf dem Molenkopf 2 ist eine stationäre Sende- und Empfangseinheit (im folgende kurz S/E-Einheit) angeordnet, die ein auf den gegenüberliegenden Molenkopf 3 gerichtetes elektromagnetisches Dauersignal 6 abstrahlt. Jedes zu schützende Fahrzeug 4, 5, 8 ist mit einer eigenen S/E-Einheit ausgerüstet, die auf Abruf ein Identifikationssignal abstrahlt, das eine das Fahrzeug identifizierende Grundkennung und eine veränderliche, die legitimierte oder unlegitimierte Benutzung des Fahrzeugs kennzeichnende Zusatzkennung enthält. An die stationäre S/E-Einheit auf der Hafenmole 2 ist ein Zentralrechner (nicht dargestellt) angeschlossen, in dem die Identifikationssignale aller in dem Hafen liegenden Wasserfahrzeuge 4, 8 abgespeichert sind. Die Erlaubnis zum Auslaufen eines der im Hafen liegenden Fahrzeuge 4, 8 wird dem Zentralrechner vom Eigner des Fahrzeugs oder einer autorisierten Person dadurch mitgeteilt, daß die Zusatzkennung des abgespeicherten Identifikationssignals des zu legitimierenden Fahrzeugs auf einen ersten vorbestimmten Wert, z.B. "0", gesetzt wird. Diese Erlaubnis kann zeitlich begrenzt sein, so daß beispielsweise nach 24 Stunden der das Auslaufen legitimierende Wert "0" der Zusatzkennung wieder in einen anderen zweiten Wert "X" abgeändert wird.

Beim Einfahren eines Fahrzeugs 4, 5 in den Sektor 6 wird die fahrzeugseitige S/E-Einheit zur Abgabe des Identifikationssignals an die stationäre S/E-Einheit auf dem Molenkopf 2 aufgefordert. Daraufhin vergleicht der Zentralrechner die Grundkennung des empfangenen Identifikationssignals mit den abgespeicherten Grundkennungen um zu entscheiden, ob es sich um ein einlaufendes Fahrzeug 5 oder um aus auslaufendes Fahrzeug 4 handelt. Da dem Zentralrechner die Grundkennungen aller innerhalb des Hafens 1 befindlichen geschützten Fahrzeuge bekannt sind handelt es sich um ein auslaufendes Fahrzeug 4, wenn dem Zentralrechner die empfangene Grundkennung bekannt ist, und es handelt sich um ein einlaufendes Fahrzeug 5, wenn dem Zentralrechner die Grundkennung des empfangenen Identifikationssignals nicht bekannt ist. Bei einer nicht bekannten Grundkennung (einlaufendes Fahrzeug) speichert der Zentralrechner das Identifikationssignal (Grundkennung + Zusatzkennung) bis zum Auslaufen ab. Wenn das Identifikationssignal des einlaufenden Fahrzeugs die Zusatzkennung "X" enthält, d.h. nicht den für das gesamte Verfahren vereinbarten und vorbestimmten ersten Legitimationswert "0", löst er ein Alarmierungs- und Informationsprogramm aus, mit dem die Daten des unberechtigt einlaufenden Schiffes, die persönlichen Daten des Schiffseigners sowie Ort und Zeit des unberechtigten Einlaufens auf einem Bildschirm einer Überwachungsorganisation, beispielsweise im Hafenbüro, erscheinen. Die auf dem Bildschirm dargestellten Daten können alternativ oder ergänzend hierzu auch von dem Zentralrechner per Telefax direkt an den Schiffseigner übermittelt werden.

Die Freigabe eines Fahrzeugs zum Auslaufen kann dem Zentralrechner entweder über eine im Hafen befindliche Eingabetastatur mitgeteilt werden, die sich beispielsweise im Hafenbüro befinden kann, oder aber über eine im Tonwählverfahren betriebene Telefonleitung. In beiden Fällen ist es zur Legitimation der freigebenden Person erforderlich, eine grundsätzlich nur dem Schiffseigner bekannte Geheimzahl in das System einzugeben, woraufhin die Zusatzkennung des betreffenden Fahrzeugs im Zentralrechner auf den ersten vorbestimmten Wert "0" gesetzt wird. Eine weitere Sicherheit ist dadurch erzielbar, wenn nach Eingabe der Geheimzahl die Grundkennung des freizugebenden Fahrzeugs eingegeben wird.

Ist dem Zentralrechner beim Empfang eines Identifikationssignals die Grundkennung bekannt (auslaufendes Fahrzeug) reagiert der Zentralrechner mit folgendem Ablauf:
1. Ist die Grundkennung des empfangenen Identifiktionssignals zum Auslaufen freigegeben worden (im Zentralrechner ist als Zusatzkennung die "0" abgespeichert), sendet die stationäre S/E-Einheit auf der Hafenmole 2 die empfangene Grundkennung mit der legitimierten Zusatzkennung "0" an das auslaufende Fahrzeug zurück. Das so zusammengesetzte Identifikationssignal bleibt dann in der fahrzeugseitigen S/E-Einheit gespeichert.
2. Ist die Grundkennung des empfangenen Identifikationssignals nicht zum Auslaufen freigegeben worden (im Zentralrechner ist zu dieser Grundkennung dann die Zusatzkennung "X" abgespeichert), sendet die stationäre S/E-Einheit der Hafenmole 2 das Identifikationssignal mit der Grundkennung und mit der Zusatzkennung "X" zurück und löst das Alarmierungs- und Informationsprogramm aus. Das so zusammengestellte Identifikationssignal wird wiederum in der fahrzeugseitigen S/E-Einheit abgespeichert.

Das Rücksenden des Identifikationssignals durch die stationäre S/E-Einheit hat somit zur Folge, daß dem auslaufenden Fahrzeug für den Schiffsführer unsichtbar eine Zusatzkennung mitgegeben wird, die es als rechtmäßig oder unrechtmäßig benutzt identifizierbar macht. Autorisierten oder behördlichen Stellen, wie z.B. Polizei, Küstenschutz etc., stehen tragbare Abfragegeräte zur Abfrage der Zusatzkennung eines Fahrzeugs zur Verfügung. Die gewünschte Information kann auf dem Abfragegerät in einfacher Weise und äußerst übersichtlich mit Hilfe von drei Leuchtdioden oder ähnlichem dargestellt werden: leuchtet beispielsweise eine gelbe Leuchtdiode, handelt es sich nicht um ein verfahrensgemäß geschütztes Fahrzeug, leuchtet die grüne Leuchtdiode, liegt eine berechtigte Benutzung des Fahrzeugs vor, und leuchtet eine rote Leuchtdiode, ist die Benutzung des Fahrzeugs unberechtigt.

Zur Freigabe eines Fahrzeugs mittels der beschriebenen Eingabe einer Geheimzahl, ggf. gefolgt von der Grundkennung des freizugebenden Fahrzeugs ist es selbstverständlich auch möglich, daß der Schiffseigner oder die autorisierte Person an der Eingabeeinheit eine Zeitspanne in vollen Stunden eingibt, um festzulegen, wie lang diese Auslaufberechtigung im Zentralrechner gespeichert bleiben soll. Dies ist insbesondere bei der Vermietung von Segel- oder Motorjachten von Vorteil, da somit der Eigner nicht an die tatsächliche Auslaufzeit gebunden ist, zu der er dann die Freigabe in den Zentralrechner eingeben müßte. Um die Möglichkeit einer Einflußnahme auf das verfahrensgemäße System weitgehend zu reduzieren ist vorzugsweise vorgesehen, daß die Geheimzahl von der Eingabeeinheit an den Zentralrechner verschlüsselt übermittelt wird, und daß die Zuordnung der Geheimzahl zur entsprechenden Grundkennung des freizugebenden Fahrzeugs erst nach Entschlüsselung der Geheimzahl im Zentralrechner selbst erfolgt.

## Patentansprüche

1. Verfahren zum Eigentumsschutz von Wasserfahrzeugen (4, 5, 8), die in einem räumlich abgrenzbaren Bereich (1) liegen, mit einer stationären Sende-/Empfangseinheit, mit einer fahrzeugseitigen Sende-/Empfangseinheit, die auf Abfrage durch die stationäre Sende-/Empfangseinheit ein fahrzeugeigenes Identifikationssignal abstrahlt, dessen Kennung eine das Fahrzeug identifizierende Grundkennung sowie eine veränderliche, die rechtmäßige Benutzung des Fahrzeugs (4, 5, 8) kennzeichnende Zusatzkennung aufweist, und mit einem stationären Zentralrechner, in dem die Identifikationssignale aller in dem abgegrenzten Bereich (1) befindlicher Wasserfahrzeuge (4, 8) abgespeichert werden, wobei die Rechtmäßigkeit einer Benutzung des Wasserfahrzeugs (4, 5, 8) anhand des empfangenen Identifikationssignals in dem Zentralrechner festgestellt und gegebenenfalls ein Alarmierungs- und Informationsprogramm ausgelöst wird,
**dadurch gekennzeichnet**,
daß die stationäre Sende-/Empfangseinheit bei Empfang einer dem Zentralrechner bekannten Kennung diese mit einer Zusatzkennung an die fahrzeugseitige Sende-/Empfangseinheit zurücksendet, und daß die zurückgesendete Zusatzkennung einem ersten vorbestimmten Wert (0) entspricht, wenn die Kennung vorher im Zentralrechner zum Auslaufen legitimiert wurde, während die zurückgesendete Zusatzkennung vom Zentralrechner auf einen zweiten vorbestimmten Wert (X) gesetzt wird, wenn keine Legitimation vorliegt.

2. Verfahren nach Anspruch 1,
**dadurch gekennzeichnet**,
daß die Zusatzkennung nur in dem stationären Zentralrechner geändert werden kann.

3. Verfahren nach Anspruch 1 oder 2,
**dadurch gekennzeichnet**,
daß der Zentralrechner die empfangene Grundkennung mit den abgespeicherten Grundkennungen vergleicht und das Alarmierungs- und Informationsprogramm auslöst, wenn die empfangene oder die abgespeicherte Zusatzkennung nicht den vorbestimmten Wert enthält.

4. Verfahren nach einem der Ansprüche 1 bis 3,
**dadurch gekennzeichnet**,
daß der Zentralrechner bei Empfang eines Identifikationssignals mit einer unbekannten Grundkennung das Identifikationssignal bis zum Auslaufen des Fahrzeugs (4, 8) abspeichert.

5. Verfahren nach einem der vorstehend genannten Ansprüche,
**dadurch gekennzeichnet**,
daß der räumlich abgrenzbare Bereich (1) durch wenigstens einen gerichteten elektromagnetischen Sektor (6) abgegrenzt wird, der von wenigstens einer stationären Sende-/Empfangseinheit erzeugt wird.

## Claims

1. A process to protect the ownership of watercraft (4,5,8) that lie in a spatially limited area (1), with a stationary transmitting/receiving unit and a transmitting/receiving unit onboard the craft, which beams an identification signal for the craft when queried by the stationary transmitting/receiving unit, whose code contains a basic code identifying the craft and an additional changing code identifying authorized use of the craft (4,5,8), with a stationary central computer, in which identification signals for all watercraft (4,5,8) found in the limited area (1) are stored, wherein the legal use of the watercraft (4,5,8) can be determined using the identification signal received in the central computer and, if necessary, an alarm and information program is triggered, characterized by the fact that when the stationary transmitting/receiving unit receives a code known to the central computer, it sends it back to the transmitting/receiving unit on the craft with an additional code and by the fact that the additional code sent back corresponds to a first predetermined value (0) if the code authorizes sailing out in the central computer, while the additional code sent back by the central computer is set at a second predetermined value (X), if there is no authorization.

2. A process according to claim 1, characterized by the fact that the additional code can only be changed in the stationary central computer.

3. A process according to claim 1 or 2, characterized by the fact that the central computer compares the basic code received with the basic codes stored, and triggers the alarm and information program if the additional code received or stored does not contain the predetermined value.

4. A process according to one of claims 1 to 3, characterized by the fact that when it receives an identification signal with an unknown basic code, the central computer stores the identification signal until the craft (4,8) sails out.

5. A process according to one of the claims above, characterized by the fact that the spatially limited area (1) is bordered by at least one directional electromagnetic sector (6), which is produced by at least one stationary transmitting/receiving unit.

## Revendications

1. Procédé de protection antivol pour des bateaux (4, 5, 8), qui sont situés dans une zone délimitée dans l'espace (1), comprenant une unité stationnaire émettrice/réceptrice, une unité émettrice/réceptrice sur le bateau, laquelle émet sur interrogation par l'unité émettrice/réceptrice stationnaire un signal d'identification propre au bateau, dont l'identificateur contient un identificateur de base qui identifie le bateau et un identificateur additionnel modifiable qui caractérise l'utilisation légitime du bateau (4, 5, 8), et comprenant un ordinateur central stationnaire dans lequel les signaux d'identification de tous les bateaux (4, 8) situés dans la zone délimitée (1) sont mémorisés, et le caractère légitime d'une utilisation du bateau (4, 5, 8) est déterminé à l'aide du signal d'identification reçu dans l'ordinateur central, et l'on déclenche le cas échéant un programme d'alarme et d'information,
caractérisé en ce que l'unité émettrice/réceptrice stationnaire, lors de la réception d'un identificateur connu de l'ordinateur central, émet celui-ci en retour avec un identificateur additionnel vers l'unité émettrice/réceptrice du bateau, et en ce que l'identificateur additionnel renvoyé correspond à une première valeur prédéterminée (0) lorsque l'identificateur a été auparavant autorisé dans l'ordinateur central pour la sortie, tandis que l'identificateur additionnel renvoyé par l'ordinateur central est fixé à une seconde valeur prédéterminée (X) lorsqu'il n'existe aucune autorisation.

2. Procédé selon la revendication 1, caractérisé en ce que l'identificateur additionnel ne peut être modifié que dans l'ordinateur central stationnaire.

3. Procédé selon l'une ou l'autre des revendications 1 et 2, caractérisé en ce que l'ordinateur central compare l'identificateur de base reçu avec les identificateurs de base mémorisés, et déclenche le programme d'alarme et d'information lorsque l'identificateur additionnel reçu ou mémorisé ne contient pas la valeur prédéterminée.

4. Procédé selon l'une quelconque des revendications 1 à 3, caractérisé en ce que, lors de la réception d'un signal d'identification avec un identificateur de base inconnu, l'ordinateur central mémorise le signal d'identification jusqu'à la sortie du bateau (4, 8).

5. Procédé selon l'une quelconque des revendications précédentes, caractérisé en ce que la zone délimitée dans l'espace (1) est délimitée par au moins un secteur électromagnétique dirigé (6), qui est produit par au moins une unité émettrice/réceptrice stationnaire.
